# EUROPEAN PATENT SPECIFICATION

(11) **EP 3 503 716 B1**
(45) Date of publication and mention of the grant of the patent: **21.01.2026**
(21) Application number: 17755286.6
(22) Date of filing: 15.08.2017
(51) Int. Cl.: A01K 1/10, A01K 5/02

(54) **SYSTEM FOR HANDLING FEED AT A FARM**
SYSTEM ZUR HANDHABUNG DES FUTTERS AUF EINER FARM
SYSTÈME DE MANIPULATION D'ALIMENTS DANS UNE FERME

(30) Priority: 25.08.2016 NL 2017364
(43) Date of publication of application: 03.07.2019
(73) Proprietor: Lely Patent N.V., 3147 PB Maassluis (NL)
(72) Inventor: FRANSEN, Renatus Ignatius Josephus, 3147 PB Maassluis (NL); VAN DEN BERG, Karel, 3147 PB Maassluis (NL); PASTOOR, Jan Lambertus, 3147 PB Maassluis (NL); BLOKLAND, Korstiaan Cornelis, 3147 PB Maassluis (NL); HUYZER, Arie, 3147 PB Maassluis (NL)
(74) Representative: Octrooibureau Van der Lely N.V.
(86) International application number: PCT/NL2017/050539
(87) International publication number: WO 2018/038602

(56) References cited:
- EP-A1- 1 779 722
- EP-A1- 1 779 722
- WO-A1-2014/054941
- WO-A1-2014/054941
- WO-A1-2016/018141
- WO-A1-2016/018141
- WO-A1-2017/021607
- WO-A1-2017/021607

## Description

This invention relates to a system arranged to handle feed at a farm.

In particular this invention relates to a system arranged to automatically handle feed present on a feed table in front of a feed fence.

In farms such as cattle and/or dairy farms, animals will be fed by dispensing feed onto a feed table in front of a feed fence. Typically animals on such farms reside and are detained in an animal living area. The animals in the living area need to be fed. Generally this is done by delimiting at least one side of the living area by the feed fence. The feed fence allows the animal, which is detained in the living area, to reach through or over/under it with its head to eat feed presented on a surface in front of the feed fence. The surface in front of the feed fence on which the feed is presented is generally called a feed table, a feed bunk or the like. The feed table or feed bunk may be simply a strip on the floor of a certain width along the length of and in front of the fence. Alternatively the feed table or feed bunk may be in the form of a trough like construction, which may be on the floor, recessed in the floor or elevated above the floor. The living area can be indoors or outdoors.

The length of the feed fence and thus of the feed table is generally chosen in relation to the number of animals housed in the living area, i.e. to the number of animals to be fed. When the living area is delimited by more than one feed fence, the necessary length may be divided over these fences. The goal is to have enough space to dispense the feed, and enough place for the animals to eat. Feeding the animals is done by dispensing feed onto the feed table along the length of the feed table. Once feed is dispensed the animals will eat the feed, all the while selecting the best bits. This behavior of selecting includes tossing feed up into the air by movement of the head, resulting in feed ending up out of reach of the animals or even outside the feed table. Typically an automated feed pusher is used to push the feed back towards the feed fence and within the reach of the animals. Such a feed pusher generally is made to move forward parallel to the feed fence and to push the feed substantially laterally with respect to the direction of movement i.e. substantially sideward towards the feed fence, such as described in e.g. EP2007191. Alternatively, a farmer may use non-automated systems such as e.g. tractor mounted feed pushers.

Since the animals are eating, the amount of feed is reduced. And at some point the animals will stop eating from the remaining feed even after it is has been pushed back to the fence within reach of the animals. Thus at some point a certain amount of uneaten material remains at the fence. The term 'rest feed' is generally used to denominate such remaining, uneaten material present on the feed table. Rest feed typically will be removed from the feed table and disposed of.

Generally removing rest feed and cleaning the feed table is done on a regular basis, which is either time based, e.g. daily or even weekly. Rest feed removing may be done non-automated or automated. In such non-automated rest feed removal, it is the farmer who decides when feed on the feed table is rest feed which needs to be removed. Thus the farmer, may for instance decide to not yet remove the feed when he is of the opinion that the animals will still eat from it if given more time. This may be the case e.g. on warm summer days when the animals eat less because of the heat. Then, if given the opportunity they may eat it when the day cools down in the afternoon. The farmer notices this and will ensure that the animals have longer access to the feed and only remove it later.

Automated systems for removing rest feed are known from e.g. EP1779722 of Koshin Engineering, which describes a feed pushing device which moves forward parallel along a feed fence and includes a feed pushing blade to laterally push feed back to the feed fence and also includes an auxiliary blade which can be used to push and gather left over feed, i.e. rest feed. This publication proposes that rest feed is collected about once a day for preventing it from rotting, and states that the leftover amount differs every day. Automated rest feed removing systems generally operate on a time schedule. Time scheduled rest feed removal cannot take circumstance into consideration in which the animals might have eaten more feed if only they had more time.

Typically, the rest feed includes inedible material and uneaten feed. Inedible material includes material such as dirt, stones, plastic and other contaminants present in the feed. Uneaten feed includes feed which the animals will eat in the end, e.g. when given enough time or when the feed is made more tasty by dispensing a concentrates or molasses or the like onto it.

A problem with the prior art automated cleaning devices is thus that with the removal of the rest feed valuable edible and uneaten feed may be removed. Thus the handling of feed present in front of the feed fence in the known and automated systems is inefficient and wasteful.

The present invention has as object to increase the efficiency of automated handling of feed at a farm with the goal to minimize the amount of edible feed in the rest feed that is removed from the feed table.

The invention achieves this object by providing a feed handling system for use at a farm, comprising
- a feed fence having a feed table for receiving feed, the feed fence separating an animal living area from the feed table while allowing animals present in the animal living area access to the feed table,
- an automatically movable frame comprising a feed displacer arranged to perform a first feed displacing action by displacing feed that is present on the feed table in a first direction substantially parallel to the feed fence and along a part of the feed table, in particular by the frame and feed displacer moving along the feed fence in the first direction, and
- a control device programmed to execute the feed displacing action by controlling the feed displacer to displace feed present on the feed table along such a part of the feed table that after the feed displacing action is completed the displaced feed is at an end location in front of the feed fence where it is accessible to the animals,

wherein the feed displacer is mounted to the frame and movable between an active and an inactive state such that when the feed displacer is in the active state and the frame is moving along the feed fence, the feed displacer displaces feed present on the feed table substantially parallel to the feed fence, and
wherein the system further includes a feed dispensing device arranged to execute a feed dispensing action in which feed is dispensed onto the feed table in dependence of a dispensing instruction by the control device of the system, and
wherein the control device is programmed to control the feed dispensing device not to dispense feed on a part of the feed table encompassing the end location of a feed displacing action.

In the system of the invention by the feed displacer executing the feed displacing action, feed present on the feed table is displaced in the first direction along a part of the feed table and parallel to the feed fence. This is distinct from the prior art of EP1779722 where the feed displaced by the feed displacer is collected from the feed table or in any event can no longer be accessed by the animals. In the system of the invention after a feed displacing action, the feed remains at the feed table and remains accessible to the animal. The feed displacing action has a start and an end, at the end, when the feed displacing action is completed the feed is at a location in front of the feed fence where it is accessible to the animal. By "displacing" as in a feed displacing action of the invention, i.e. between a start and an end of the feed displacing action, it is meant the feed which was present on that partial length of the feed table will end up gathered together at the end of that action in a kind of pile. Displacing the feed along a portion of the feed table thus results in gathering together the feed present on that part of the feed table. Thus feed that was previously stretched out and divided over the length of that part of the feed fence is now accessible at the location where the feed displacing action ended, in a sort of pile. The size of the pile of course depends on the amount of feed that was present and has been gathered together.

The gathering together can be realized by pushing the feed with a feed pushing blade similar to the auxiliary blade as disclosed in EP1779722. Or by other means, e.g. brush, blower, auger or the like. The underlying idea of the invention is that the animals when given ample time to access the feed, will select and eat all or at least more edible bits from the feed presented to them. Thus, the system of the invention will lead to less rest feed, because there will be material containing less uneaten edible feed. The system thus provides an improvement over prior art systems which remove all the rest feed from the feed table thus wasting edible feed. By allowing the animals to access the feed which is gathered together in a feed displacing action, animals may once more select and feed from it. Thus in general the amount of feed wasted is reduced.

Another advantage has to do with the fact that each feed fence with feed table has locations which are less popular to the animals for various reasons, such as drafty or noisy locations. Animals will avoid such locations even though feed is present on the feed table there. The amount of feed remaining on the feed table at such unpopular locations may be more then the amount that is on average left uneaten on the feed table at popular locations. When such feed is removed, as is common practice in the prior art, larger amounts of edible feed of good quality are then removed. In the system of the invention however, the feed is displaced parallel along a part of the feed fence such that after the feed is displaced feed it is still accessible to the animals. The part of the fence to which the feed is displaced, may be a location along the feed fence which may be more popular and thus will be visited more by the animals. Since, the displaced rest feed is on a part of the feed table that is accessible to the animals, they will eat from it. Thus, by allowing the animals access to the rest feed they may still select the good stuff, which results in less waste. The animals will approach, select feed from it and thus this amount will decrease. If however the displaced feed does not contain any edible material, the amount even though the animals have access to it will not be reduced.

Yet another advantage of the system is that at any point in time during the day, the feed displacing action may take place. After all, since the feed remains accessible to the animals, it does not when the feed is displace, nor does it matter if there is still a considerable amount of edible, uneaten feed in the feed that is being displaced. This renders the invention particularly useful to be applied in farms with fully automated feeding systems, in particular when such fully automated feeding systems dispense feed based on a determination of the amount of feed present at the feed fence. After all, in such systems, it is hard to know when the next feeding round will be executed and thus hard to control when and how the rest feed should be removed.

During the displacement of the feed parallel along the fence, some sideways displacement of feed towards the feed fence may also occur.

According to the invention the feed displacer is mounted to the frame and movable between an active and an inactive state such that in when the feed displacer is in the active state and the frame is moving along the feed fence, the feed displacer displaces feed present on the feed table substantially parallel to the feed fence.

By making the feed displacer movable between an active and inactive position movement of the frame parallel along the feed fence will not always cause displacement of the feed. Thus, feed can be displaced selectively, e.g. along a part of the length of the feed fence.

According to the invention, the system further includes a feed dispensing device arranged to execute a feed dispensing action in which feed is dispensed onto the feed table depending of a dispensing instruction by the control device of the system.

By providing a feed dispensing device the system becomes more complete. Not only may rest feed be displaced, but also fresh feed may be dispensed. It is advantageous to have the feed dispensing being controlled by the control device of the system. Thus dispensing and displacing actions of the system may be coordinated. For example it would be useless to execute a feed displacing action immediately after fresh feed has been dispensed. Thus such a coordination may be necessary, in particular when the feed dispensing device is autonomous and controlled by the amount of feed present on the feed table. In such a situation, with two autonomous devices one for dispensing feed and one for displacing feed a conflict may occur. After all it is in the interest of the animals to have feed available to them, and thus a low level of feed could indicate to the feed dispensing system that feed needs to be dispensed, while at the same time a low level of feed could indicate to the feed displacing system that rest feed needs to be displaced. By having the control device control both the feed displacing and the feed dispensing it is possible to control that the feed dispensing will take place after or even immediately after a feed displacing action. Thus the system becomes more efficient.

According to the invention the control device is programmed to control the feed dispensing device not to dispense feed on a part of the feed table encompassing the end location of a feed displacing action.

By providing a program in the control device not to dispense feed on a part of the feed table encompassing the end location of a feed displacing action, it may be prevented to dispense fresh feed over the gathered together rest feed. The part of the feed table encompassing the end location fo the feed displacing action, can be chosen to be sufficiently long for the feed dispensing device to be able to stop dispensing before the end location is reached, and start again after it is passed. In this manner the gathered together rest feed is not covered by fresh feed, and the animal can easily reach it and select the best bits.

According to a further aspect of the invention the feed displacer comprises a slide having a lower edge for contact with the feed table, which slide in the active state projects from the frame to the feed fence over the feed table at fence the feed table such that when the frame is moved in the first direction feed present on the feed table is displaced. By providing a slide a technologically simple device may be used to displace and gather together the rest feed present on the feed table. The slide in active position projects across the feed table with the lower edge near or on the feed table. The width and height of the slide are chosen to be sufficient for feed to be pushed and gathered together, e.g. not too low as to cause feed to fall to the downstream side of the slide and not too narrow in order to cover the total lateral width of the feed table. The slide has a free end which slides along the feed fence where the feed fence and the feed table meet. The angle enclosed by the feed fence and the lower edge of the slide preferably is a right angle or an acute angle which helps in keeping the feed on the feed table while it is moved parallel to the fence.

According to yet another aspect of the invention the control device is programmed execute a subsequent feed displacing action encompassing the end location of the previous feed displacing action.

By controlling the feed displacing actions such that a subsequent feed displacing action encompasses the end location of a previous feed displacing action, in time in a number of subsequent feed displacing actions the complete length of the feed table will have been subject of a feed displacing action. In this manner when the first feed displacing action is started at an end of the feed fence, in time the system will have displaced feed along the complete fence at which time the feed may advantageously be removed from the feed table. Thus this aspect of the invention ensures that no rest feed is left unattended.

For example the feed displacer may be controlled to displace feed from the start of the feed fence, parallel along the fence over e.g. 5 meters. Thus the feed displacing action will be completed at a first end position at "begin+5 meters" where an amount of gathered together feed will be accessible to the animals. The subsequent feed displacing action will then, according to this aspect of the invention of encompassing the end position of a previous fee displacing action, start at this first end position. Thus in this example the subsequent feed displacing action will start at "begin + 5 meters", and for example displace again over 5 meters resulting in completion of the further displacing action at a second end position of "begin + 5 meters+ 5 meters". Between the completion of the first feed displacing action and start of the further feed displacing action the animals will have had access to the feed at the first end position and thus may have continued to eat from it all the while selecting the best bits and reducing the amount of feed at that position. In the further feed displacing action, this reduced amount of feed is then displaced, and of course any feed present over the next 5 meters is also gathered. Thus at completion of the further feed displacing action at the second end position, less of the rest feed of the first feed displacing action and in particular less of the edible feed of the first feed displacing action will be present there. After all, the animals had access to the rest feed at the first end position between the first and the subsequent feed displacing action. In this manner the system can efficiently, in a number of sequential feed displacing actions clean out the feed table.

According to a further embodiment of the invention the control device is programmed to execute the feed displacing action and/or the subsequent feed displacing action in dependence on a rest feed parameter. By programming the control device to execute the feed displacing actions in dependence on a rest feed parameter, the system may operate automatically without human intervention.

According to an aspect of the invention the rest feed parameter comprises at least one of the amount, the height or the temperature of the feed on the feed table or part thereof, an amount time elapsed since the previous feed displacing action and/or a scheduled point of time. Various parameters may be taken into account to determine when a feed displacing action should take place.

One very useful rest feed parameter is the amount or height of feed on the feed table, or the reduction of the amount of feed over time. When the amount of feed is below a predetermined level and/or when the rate in which the amount of feed reduces over time is below a predetermined rate, the control device may control the system to execute a further feed displacing action.

The height of feed on the feed table may be determined by using a feed level meter such a laser distance meter which measures the height of the feed, the height is then taken as an indication of the amount of feed. Such a laser distance meter is a very accurate and reliable means of determining the feed level. In addition, the use of a laser beam has the advantage that the laser beam, obviously depending on the wavelength, is visible to the user, so that he/she can readjust the location where the measurement takes place. Alternatively and/or additionally, the feed level meter in the form of a mechanical sensor or an ultrasonic meter may be used. A mechanical sensor has the advantage of being simplest, but it has to be flexible, as a result of which the reliability cannot always be ensured. An ultrasonic sensor is a technique for measuring a distance which is also used a great deal and could, for example, be combined with a light beam, such as a laser beam, in order to indicate the position of the measurement. However, other distance-measuring devices known in the prior art are not excluded.

Instead of a feed level meter the amount of the feed on the feed table may also be determined by providing the feed table with weighing means, such as load cells or scales or the like. Yet another means to determine the amount of feed on the feed table is the use of a camera, 2D or 3D, and image acquisition and image analysis means to determine an amount or an indication of an amount from the images.

Another useful rest feed parameter is the temperature of the feed present on the feed table, because temperature is an indication of quality. When the temperature of feed is outside a predetermined range or over or under some predetermined indicator temperatures, absolutely or relative to the ambient temperature, the control device may control the system to execute a further feed displacing action.

Other very useful rest feed parameters are the amount of time elapsed since a previous feed displacing action, or a scheduled point in time. By using time related parameters the system can be controlled by providing it with a clock and a suitable algorithm. For example the system will determine the time which a feed displacement action was ended and sets a timer for an interval of e.g. 24 hours. When the set interval of e.g. 24 hours have passed, the system will control the feed displacer to execute subsequent feed displacing action. Alternatively the system may e.g. be programmed to execute a feed displacement action at a scheduled point in time, such as e.g. daily at 7:00 AM.

In combination with other rest feed parameters the system may thus become very efficient. For example the system may be programmed to execute feed displacement actions based on the amount of feed at the feed fence and within a predetermined period of time after the amount of feed at the fence was determined to be below the set amount level.

According to a further embodiment of the invention the end location of the feed displacing action is controlled by the control device in dependence on an end location parameter. By programming the control device to determine the end location of a feed displacing action in dependence on an end location parameter, the system may operate automatically without human intervention.

According to an aspect of the invention the end location parameter is a predetermined displacing distance from the start of the feed displacement action or a variable displacing distance from the start of the feed displacement action wherein the variable displacing distance is based on the amount of feed gathered together by the feed displacer.

By working with a predetermined feed displacing distance the feed displacement action will always be performed over a fixed length of the feed table independent of the amount of feed present. The system may be provided with e.g. marks on the fence or feed table at predetermined distances from each other which can be observed by a camera. In case that the frame is part of an autonomous vehicle, the vehicle may be provided with an odometer to indicate the distance traveled.

The variable displacing distance based on the amount of feed gathered together by the feed displacer, may by realized by providing e.g. load cells in the feed displacer which indicate the force needed to displace the feed. When more feed is gathered at the feed displacer, the force needed will increase. At a predetermined level the feed displacing action may then be ended. Alternatively, in case that the frame is part of an autonomous vehicle, the power needed to move the vehicle with a pre-set speed may be used as parameter. When more feed is gathered at the feed displacer, the power needed will increase. At a predetermined level of the power the feed displacing action may then be ended.

According to an aspect of the invention the control device is programmed to control the feed dispensing device to dispense fresh feed between the start location and the end location of a feed displacing action.

By controlling the feed dispensing system to dispense feed on the feed table where feed has been displaced, fresh feed is dispensed on an empty feed table section. That part of the feed table is empty and the feed gathered together is piled up at the end position of the feed displacement action. So the animals get more time to eat from the rest feed on the pile, while at the same time the system ensures that sufficient feed is present on the feed table. This control is useful for example when the end location of a feed displacing action is based on the amount of feed gathered together by the feed displacer, because in such situations when there is almost no rest feed, the whole feed table may become empty.

According to a further aspect of the invention the feed dispensing device is mounted to the frame. By mounting the feed dispensing system to the frame a compact system is achieved.

In an embodiment the system further includes a feed pushing device arranged to push feed present on the feed table substantially sideward and in a direction lateral to the direction in which the feed table extends. A proper feed handling system will include a feed pushing device which is arranged to push the feed toward the feed fence, thus it is ensured that the feed will be within reach of the animals.

According to an aspect of the invention the feed pushing device comprises a rotatable circular element or skirt. Rotatable skirt feed pushers are known for their efficient and low energy operation, so it is renders the system more efficient to use a rotatable skirt feed pusher.

According to an embodiment of the invention the system is provided with a feed removing device arranged to perform a feed removing action by displacing feed outside the feed table where it is no longer accessible to the animals, and the control device is programmed to execute the feed removing action by controlling the feed displacer to perform the feed removing action.

By providing the system with a feed removing device and a control device which can execute a feed removing action, the system becomes capable of not only handling feed, but also of actually removing rest feed from the feed table. In this sense, any feed on the feed table which is accessible to the animals may be subject to either a feed displacing action or a feed removing action. Removing feed, which is typically done with rest feed, is done in accordance with the invention by the feed remover displacing the feed out of reach of the animals. This may mean beyond the end of the feed table, or feed fence by displacing the feed in the first direction parallel to the feed fence. This is easily realized when the feed displacer is also the feed remover, and controlling the feed displacer to displace the feed in the first direction parallel along feed fence and beyond the feed table or beyond the feed fence. In this way the rest feed ends up out of reach of the animals.

Alternatively, the feed pusher may be used as feed remover, in particular a feed pusher having a rotatable skirt. Such a feed remover may displace the feed outside the feed table by displacing it in a second direction distinct from the first direction by rotation the skirt in an opposite direction by which it will push the feed laterally away from the feeding fence into the feeding alley. The feed remover may also be in the form of a scoop, which may be controlled to scoop the feed up in which case the direction of displacement is upwards. Of course in such this embodiment it would be efficient to also have a container into which the scooped up rest feed may be unloaded.
According to an aspect of the sixth embodiment of the invention the feed removing may be provided on the frame. Note that the container for rest feed when the feed is scooped up, may also be provided on the frame, but may also be on a separate frame.

According to an embodiment of the invention the frame is part of an autonomous movable vehicle. Autonomous vehicles are very useful for a system for handling feed. In particular on a farm with multiple feed fences and feed tables an autonomous vehicle can relatively easily be programmed to drive different routes in order to handle feed at different feed tables. This makes the system versatile without needing hardware building adaptations, such as are necessary for rail mounted frames.

The invention will be explained in more detail below with reference to the drawing figures in which:
- Figure 1 is a schematic top view of an embodiment of the feed handling system according to the invention, including a feed displacer arranged to displace feed parallel to the feed fence and along a part of the feed table;
- Figure 2 is a schematic side view of the feed displacer of figure 1;
- Figure 3 is a schematic side view of a further embodiment, in which the feed system further includes a feed dispensing device and a feed pushing device arranged to push feed towards the feed fence;
- Figures 4a-4d are schematic top views of the feed system of figure 3 during different stages of executing a feed displacing action in accordance with the invention;
- Figures 5a-5f are schematic side view of the feed table of the feed handling system and feed present on the feed table during a sequence of feed displacing and feed dispensing actions.

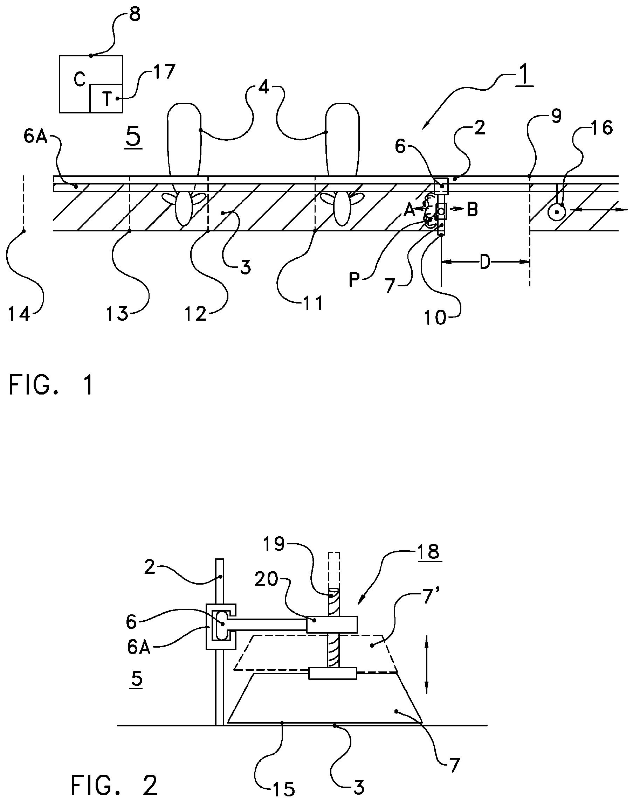

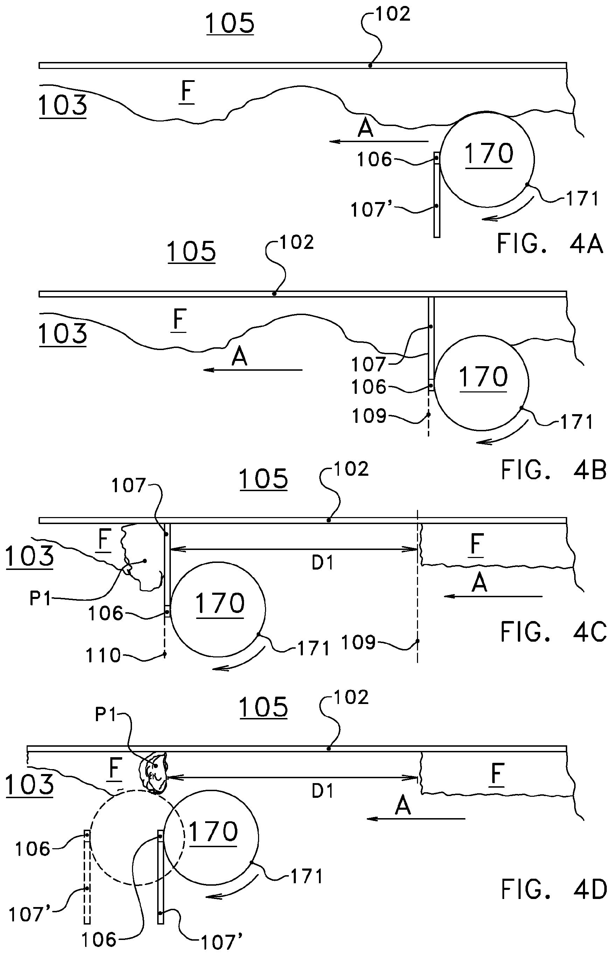

Figure 1 shows the feed handling system 1 of the invention with feed fence 2 having feed table 3 for receiving feed F, the feed fence 2 separating animal living area 5 from feed table 3 while allowing animals 4 present in animal living area 5 access to the feed table 3. The system has an automatically movable frame 6 mounted to a rail 6A on the feed fence and carrying feed displacer 7 in the form of a slide 7. The slide is arranged to perform a first feed displacing action by displacing feed F that is present on the feed table in a direction (A,B) substantially parallel to the feed fence and along a part of the feed table. For example the slide will push feed F from start location 9 to end location 10 over feed displacing distance D. This is done by the slide moving in direction of arrow A, parallel along the feed fence. The system includes a control device 8, which can be a computer which is programmed to send control instructions to the frame 6 carrying the feed displacer 7, to move from start location 9 to end location 10, thus executing a feed displacing action. The control device and the frame are designed to be able to send and receive suitable data and instructions, and are designed to include control and drive systems which can operate following the reception of such instructions. Figures 1 and 4, show examples where a feed displacing action starts at location 9 and ends at location 10, the feed has been displaced over distance D. As is schematically indicated in figure 1 the feed that has been pushed out of the part of the feed table 3 over distance D has been gathered together in a kind of pile P. Of course the feed displacement action could also have been started at location 10 and ended at location 13.

As best shown in Figures 2 and 4, the feed displacer 7 is movable between an active position where it will be in contact with feed on the feed table, and an inactive position 7' where it is not in contact with feed.

Figure 2 shows the slide 7 on frame 6 which is mounted to a rail 6A. Here slide 7 is provided with a linear spindle actuator 18 including the spindle and housing 20 which includes the electromotor and spindle nut to move the spindle and thus the slide up and down. In the active position slide 7 has its bottom edge 15 in contact with the feed table. When frame 6 is moved parallel to the feed table in direction A (as shown in figure 1) the slide will push the feed present on the table in the same direction and thus will gather the feed together. Housing 20 on frame 6 also contains suitable electronics for receiving the data and instructions from the control device 8, to execute the feed displacing action.

Figure 4 shows slide 7 on frame 6 in another embodiment, where the slide is moved horizontally between the active 7 and inactive position 7'. A similar linear actuator as shown in figure 2 can be used, oriented horizontally on frame 6. This is not shown in figure 4.

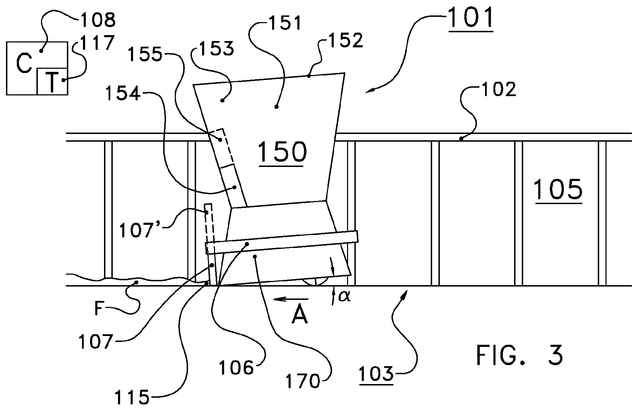

A further embodiment of the feed handling system is depicted in figures 3-5 in which like parts have been identified with like numbers of figures 1-2 increased by 100. The feed system 101 is shown in front of feed fence 102 driving parallel along feed table 103 in direction A. In the embodiment of figure 3 the frame 106 is depicted as an unmanned vehicle provided, having the feed displacer 107, and a feed dispensing device 150 and a feed pusher 170. Figure 3 shows the feed displacer 107 in active position, in contact with feed F. Bottom edge 115 of the feed displacer is shown in contact with the feed table floor. In dashed lines the feed displacer is depicted in the inactive position 107'.

The feed dispensing device 150 is shown to have a feed container 151 which is a receptacle with top opening 152, a bottom (not shown) and upright side wall 153 mounted to the bottom and delimiting the opening, and which container is slightly elongate and includes a mixing device which comprises an auger (not shown). If desired, it can also comprise a bottom scraper. The side wall 153 has a dispensing opening 154 which can be closed off by a door 155 (shown in dashed line). A door motor (not shown), such as a stepping motor, serves to move the door between open and closed position. The door 155 has a shape which corresponds to the shape of the container 151 and the side wall 153, respectively. When the door 155 is closed, the inside of the container 151 is smooth, without projections, and the side wall 153 runs in a fluent, symmetrical manner.

A dispensing roller (not shown) is placed in front of the dispensing opening 154 and which is provided with teeth and can be rotated by means of roller drive. In use, the teeth extend into the container, while the roller can be detained in a position, the at-rest position, in which the teeth do not extend into the container 154 and the door 155 can be closed. In use when the dispensing roller is rotated with the teeth extending into the container, the roller will engage feed present in the container and pull it outwardly, thus dispensing the feed.

The feed pusher 170 is provided for displacing feed F substantially transverse to the direction of travel A of the frame 106. Thus the function of the feed pusher is to push the feed towards the feed fence. Such feed pusher can be constituted by an obliquely disposed slide, or by a conveyor belt. However, according to the embodiment figure 3, these feed pusher 170 is a freely rotatable circular element 171. When, during operation of the unmanned vehicle 106, the circular element or skirt 171, which may be for example a ring or a disc, comes into contact with the feed F, said element 171 is rotated automatically, in other words the circular element 171 is feed driven. An extremely reproducible displacement of the feed is obtained if the circular element 171 is tilted through an angle α in such a way that, at least almost in the direction of travel A of the vehicle 1, it is located closest to the floor. In dependence on the feed to be displaced, the angle α enclosed by the circular element 171 and the floor, can be adjustable. If desired, the angle α is adjustable. More details about the rotatable skirt 171, the angle α and the control of the feed pusher are disclosed in patent publications WO2007120036 and WO2013004485.

Alternatively to being feed driven as described above the circular element can be motor driven.

Figures 4A-4D illustrates the process and the effect of a feed displacing action of the device of Figure 3, i.e. a device which also includes a feed pusher which pushes the feed toward the feed fence 102. Figures 4A-4D schematically show a feed displacer 107 on frame 106 which frame also includes a feed pusher 170 in the form of a rotatable skirt 171. The rotatable skirt pushes the feed transversely with respect to the direction of travel A of the frame.

Figure 4A illustrates a typical situation at a feed fence, namely when animals have had the opportunity to feed from the feed F while selecting the best bits. The feed F has is not close to the fence 102 but, shown to be unevenly distributed over feed table 103. Some places have less feed than others. In figure 4A the feed displacer is shown in the inactive position 107', it is out of reach of the feed, while the circular element 171 of the feed pusher is in contact with the feed. In figure 4B the feed displacer 107 is in the active position 107' and feed is being displaced parallel to the fence 102 along the feed table 103. Figure 4C shows the situation at end of a feed displacing action with a pile P1 at position 110. Feed is no longer present on the feed table between positions 109 and 110, and feed present on portion D has been moved and gathered together by feed displacer 107. In figure 4C it can also be seen that the feed before position 109 has been pushed back to the feed fence by the feed pusher 170, 171.

Figure 4D illustrates that the feed displacer is put from the active position 170' (solid line) to the inactive position 170' (dashed line) and the feed pusher continues to travel in the direction of arrow A and thus to push the feed back to the feed fence.

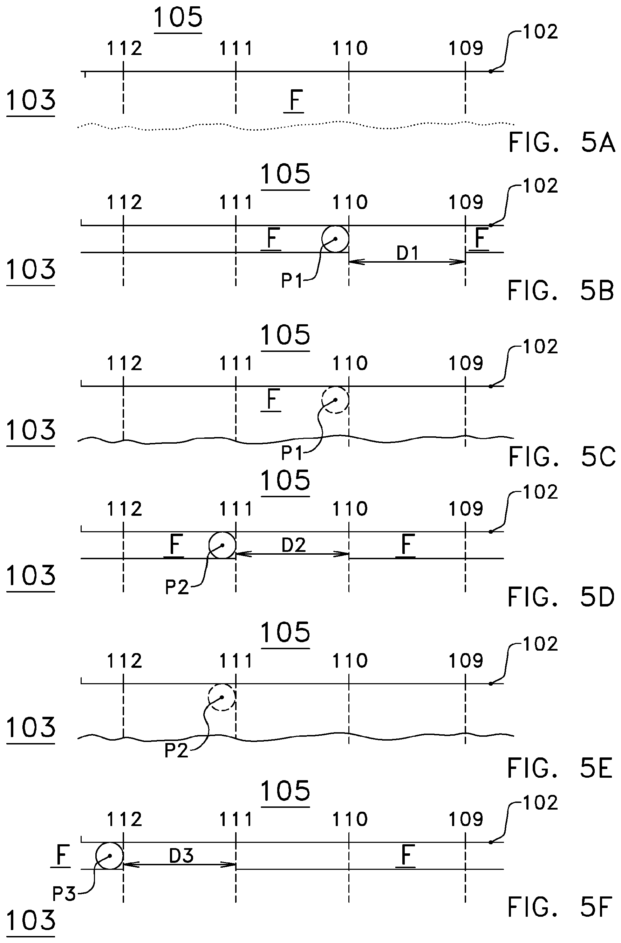

In use the feed displacer 7, 107 is controlled to end a feed displacing action at an end position along the feed table/feed fence, and to start a subsequent feed displacing action at a location which encompasses the end location of the previous feed displacing action. Figures 5A-5F schematically illustrate this. Figure 5B illustrates the situation at the feed fence after completion of a feed displacing action which started at position 109 and ended at end position 110. As is visible there is no feed present between the positions 109 and 110 and a pile P1 is depicted at position 110. Pile P1 is a schematic representation of the material that has been pushed and gathered by the feed displacer over the distance D1 between the positions 109 and 110. Figure 5D illustrates the situation at the feed fence after completion of a further feed displacing action which started at position 110 and ended at end position 111. A pile P2 is now present at position 111. The start of the further feed displacing action at 110 has the effect that any material present at the position where pile P1 was, is encompassed in the further feed displacing action. Note that in accordance with the invention, between the two subsequent feed displacing actions the material on pile P1 has been accessible to the animals. So any feed present in pile P1 may have been consumed by the animals and the material in pile P2 after the further feed displacement action may not be the same material, nor the same quantity of material. The material in pile P2 is simply the material present between positions 110 and 111 which has been pushed and gathered by the feed displacer over the distance D2. Figure 5F illustrated the situation after yet another further feed displacing action which results in a pile P3 at position 112.

Figures 5A-5F schematically illustrate a possible control of feed dispensing and the feed displacing actions, and in particular where to dispense feed. Figure 5A depicts a situation with feed on the feed table some time after a feed dispensing action, this is illustrated by a continuous line delimiting the feed F on the feed table 103. Figure 5B, as described above, illustrated the situation at the feed fence after completion of a feed displacing action which started at position 109 and ended at end position 110. Figure 5C shows a situation where a further feed dispensing action has taken place. Please note that pile P1 is now shown in dashed lines to illustrate that fresh feed has been dispensed over the gathered together pile P1, and consequently does not form part of the claimed invention. Figures 5D and 5E are analogous to figures 5A and 5B. The control illustrated by Figures 5A-5F is chosen such as to dispense feed on the whole feed table 103.

According to the invention, the control is arranged to dispense feed only on the cleaned portion D of the feed table, i.e. between the start and end location of a feed displacement action.

The control unit 8, 108 is programmed to control the end location of a feed displacing action is controlled by the control device in dependence on an end location parameter. This means that the distance D between a start location and an end location of a feed displacement action is controlled. In an embodiment the end location, such as e.g. location 110 with respect to start location 109 is determined by a predetermined displacing distance D from the start of the feed displacement action. Alternatively a variable displacing distance from the start of the feed displacement action may determine the distance D, e.g. the variable displacing distance may be based on the amount of feed gathered together by the feed displacer. The amount of feed may be determined by the power needed by the feed displacer to travel (and displace) the feed over a distance. More feed in front of the displacer 7, 107 will require more power to be displaced, and when a predetermined threshold has been exceeded the displacement action is stopped. This means that distances D1, D2, D3 of figures 5B, 5D and 5F would not be identical in length.

In addition to controlling the start and end positions of the feed displacing actions, the controller is also programmed when to start a feed displacing action.
The controller 8, 108 is programmed to start a feed displacing action in dependence on rest feed parameter. This rest feed parameter can be the amount or height of feed on the feed table at the feed fence. The amount can be measured by a feed height sensor, such as sensor 16 of figure 1. The sensor 16 of figure 1, is shown as mounted to track 6A and is movable along the track. The sensor 16 may be a simple height measuring device such as a laser and may be moved along track 6a to measure the height of the feed on the feed table. Other ways in which the amount of feed at the feed table maybe determined are a similar laser sensor on the frame 6 which carries the feed displacer 7, or on an autonomous vehicle. Alternatively the feed table 3 may be mounted to weighing cells and the weight of the feed present can be determined, or one or more 3D cameras may be provided, which based on image acquired from the feed table can determine the amount of feed present. Details of the manner in which the laser sensor 16 may be used to provide data about the amount of feed on the feed table are disclosed in patent publication WO2013112042.

Another rest feed parameter may be the temperature of the feed on the feed table. The temperature may be easily determined e.g. by an infrared non-contact thermometer which may be provided similarly described above in relation to the amount sensor 16, i.e. on the rail 6a or the movable frame 6, 106 or on an independent autonomous vehicle. Such infrared thermometers which infer temperature from a portion of the thermal radiation sometimes called blackbody radiation emitted by the object being measured. The general principle is known in the art. Note that contact thermometers may also be used but are deemed less convenient.
Another rest feed parameter may be the amount time elapsed since the previous feed displacing action and/or a scheduled point of time.

In use the control unit 8, 108 can control the feed displacer 7, 107 in combination with the frame, to move feed outside of reach of the animals. The feed displacer 7, 107 then functions as a feed removing device. Alternatively the feed pusher 170 with the rotatable skirt 171 may be controlled to remove feed, by rotating in a direction which pushes the feed on the feed table transversely to the direction of movement but also away of the feed fence. By having the frame 106 traveling closer to the fence, the material remaining on the feed table may be displaced out of reach of the animals. Alternatively other devices may be uses, such as e.g. a gripper on the frame which can grip the feed, lift it and move it outside reach of the animals.

The easiest manner is to program the control unit to push a feed pile which is near the end of the feed table 3, e.g. in position 13, to final position 14 which is beyond the feed fence and out of reach of the animals. In an automated system, the control may be programmed to message the farmer, e.g. by text message to the farmers smartphone, that rest feed needs to be removed. This need not be done each time a pile is pushed to the final position 14, but may depend on a parameter analogously to the rest feed parameter. Of course, it is not necessary to have the final position 14 beyond the feed fence, in stables where there is no place in the barn beyond the feed fence, the end of the feed fence can be programmed to be the final position.

In order to determine the various start and end positions of the feed displacing actions the system is provided with suitable means to determine such positions. These means may include typical localization means as known in the state of the art of autonomous vehicle navigation. Such as e.g. odometry, vision-based navigation uses optical sensors to extract the visual features required to the localization in the surrounding environment. The start and end locations of each feed displacing action are stored in a memory of the control and retrieved for the further feed displacing actions. Such navigational control may be present on the autonomous vehicle in case the frame 6, 106 is part of an autonomous vehicle.

The embodiments shown in the figures must not be seen as limiting the scope of the invention, the scope of the invention is determined by the claims.

As such it is noted that although the embodiment of Figure 3 shows a combination of a feed dispensing device and a feed pusher in a single apparatus, this is not necessary for the invention according to which a feed pusher without a feed dispensing device is also a possible embodiment.

## Claims

1. A feed handling system (1, 101) for use at a farm, comprising
- a feed fence (2, 102) having a feed table (3, 103) for receiving feed (F), the feed fence separating an animal living area (5) from the feed table while allowing animals present in the animal living area access to the feed table,
- an automatically movable frame (6, 106) comprising a feed displacer (7, 107) arranged to perform a first feed displacing action by displacing feed that is present on the feed table in a first direction substantially parallel to the feed fence and along a part of the feed table, in particular by the frame and feed displacer moving along the feed fence in the first direction, and
- a control device (8, 108) programmed to execute the feed displacing action by controlling the feed displacer (7, 107) to displace feed present on the feed table along such a part of the feed table that after the feed displacing action is completed the displaced feed is at an end location in front of the feed fence where it is accessible to the animals,
wherein the feed displacer is mounted to the frame and movable between an active and an inactive state (7', 107') such that when the feed displacer is in the active state and the frame is moving along the feed fence, the feed displacer displaces feed present on the feed table substantially parallel to the feed fence,
**characterised in that** the system further includes a feed dispensing device (150) arranged to execute a feed dispensing action in which feed is dispensed onto the feed table in dependence of a dispensing instruction by the control device of the system, and wherein the control device (8, 108) is programmed to control the feed dispensing device (150) not to dispense feed on a part of the feed table (3, 103) encompassing the end location of a feed displacing action.

2. The system of claim 1, wherein the feed displacer comprises a slide (7) having a lower edge (!5, 115) for contact with the feed table, which slide in the active state projects from the frame over the feed table at the fence such that when the frame is moved in the first direction feed present on the feed table is displaced.

3. The system of claim 1 or 2, wherein the control device (8, 108) is programmed to execute a subsequent feed displacing action encompassing the end location of the previous feed displacing action.

4. The system of any of the preceding claims, wherein the control device (8, 108) is programmed to execute the feed displacing action and/or the subsequent feed displacing action in dependence on a rest feed parameter.

5. The system of claim 4, wherein the rest feed parameter comprises the amount, the height or the temperature of the feed on the feed table or part thereof and/or an amount time elapsed since the previous feed displacing action and/or a scheduled point of time.

6. The system of any of the preceding claims, wherein the end location of a feed displacing action is controlled by the control device (8, 108) in dependence on an end location parameter.

7. The system of claim 6, wherein the end location parameter is a predetermined displacing distance from the start of the feed displacement action or a variable displacing distance from the start of the feed displacement action, wherein the variable displacing distance is based on the amount of feed gathered together by the feed displacer.

8. The system of any of the preceding claims, wherein the feed dispensing device (150) is mounted to the frame.

9. The system of any of the precedings claims, wherein the control device (8, 108) is programmed to control the feed dispensing device to dispense fresh feed between the start location and the end location of a feed displacing action.

10. The system of any of the preceding claims, wherein the system further includes a feed pushing device (170) arranged to push feed present on the feed table substantially sideward and in a direction lateral to the direction in which the feed table extends.

11. The system of claim 10, wherein the feed pushing device (170) comprises a rotatable circular element.

12. The system of any of the preceding claims, wherein the system is provided with a feed removing device arranged to perform a feed removing action by displacing feed outside the feed table where it is no longer accessible to the animals, and the control device (8, 108) is programmed to execute the feed removing action by controlling the feed displacer (7, 107) to perform the feed removing action.

13. The system of any of the preceding claims, wherein the frame is part of an autonomous movable vehicle.

## Patentansprüche

1. Futterhandhabungssystem (1, 101) zur Verwendung an einem landwirtschaftlichen Betrieb, umfassend
- ein Fressgitter (2, 102) mit einem Futtertisch (3, 103) zur Aufnahme von Futter (F), wobei das Fressgitter einen Tierlebensraum (5) von dem Futtertisch trennt, während es im Tierlebensraum befindlichen Tieren einen Zugang zum Futtertisch ermöglicht,
- einen automatisch bewegbaren Rahmen (6, 106), der eine Futterverschiebevorrichtung (7, 107) umfasst, die dazu eingerichtet ist, eine erste Futterverschiebeaktion durch Verschieben von auf dem Futtertisch befindlichem Futter in einer ersten Richtung im Wesentlichen parallel zu dem Fressgitter und entlang eines Teils des Futtertischs durchzuführen, insbesondere indem sich der Rahmen und die Futterverschiebevorrichtung entlang des Fressgitters in der ersten Richtung bewegen, und
- eine Steuervorrichtung (8, 108), die dazu programmiert ist, die Futterverschiebeaktion durch Steuern der Futterverschiebevorrichtung (7, 107) auszuführen, um auf dem Futtertisch befindliches Futter entlang eines derartigen Teils des Futtertisches zu verschieben, dass sich nach Abschluss der Futterverschiebeaktion das verschobene Futter an einer Endposition vor dem Fressgitter befindet, an der es für die Tiere zugänglich ist,
wobei die Futterverschiebevorrichtung an dem Rahmen montiert und zwischen einem aktiven und einem inaktiven Zustand (7', 107') bewegbar ist, so dass, wenn sich die Futterverschiebevorrichtung in dem aktiven Zustand befindet und sich der Rahmen entlang des Fressgitters bewegt, die Futterverschiebevorrichtung auf dem Futtertisch befindliches Futter im Wesentlichen parallel zu dem Fressgitter verschiebt,
**dadurch gekennzeichnet, dass** das System ferner eine Futterabgabevorrichtung (150) umfasst, die dazu eingerichtet ist, eine Futterabgabeaktion auszuführen, bei der Futter in Abhängigkeit von einer Abgabeanweisung durch die Steuervorrichtung des Systems auf den Futtertisch abgegeben wird, und wobei die Steuervorrichtung (8, 108) dazu programmiert ist, die Futterabgabevorrichtung (150) so zu steuern, dass sie kein Futter auf einen Teil des Futtertisches (3, 103) abgibt, der die Endposition einer Futterverschiebeaktion einschließt.

2. System nach Anspruch 1, wobei die Futterverschiebevorrichtung einen Schieber (7) mit einer Unterkante (15, 115) für einen Kontakt mit dem Futtertisch umfasst, wobei der Schieber im aktiven Zustand von dem Rahmen über dem Futtertisch an dem Gitter so hervorsteht, dass, wenn der Rahmen in der ersten Richtung bewegt wird, auf dem Futtertisch befindliches Futter verschoben wird.

3. System nach Anspruch 1 oder 2, wobei die Steuervorrichtung (8, 108) dazu programmiert ist, eine nachfolgende Futterverschiebeaktion auszuführen, die die Endposition der vorherigen Futterverschiebeaktion einschließt.

4. System nach einem der vorhergehenden Ansprüche, wobei die Steuervorrichtung (8, 108) dazu programmiert ist, die Futterverschiebeaktion und/oder die nachfolgende Futterverschiebeaktion in Abhängigkeit von einem Restfutterparameter auszuführen.

5. System nach Anspruch 4, wobei der Restfutterparameter die Menge, die Höhe oder die Temperatur des Futters auf dem Futtertisch oder einem Teil davon und/oder eine seit der vorherigen Futterverschiebeaktion und/oder einem geplanten Zeitpunkt verstrichene Zeitdauer umfasst.

6. System nach einem der vorhergehenden Ansprüche, wobei die Endposition einer Futterverschiebeaktion durch die Steuervorrichtung (8, 108) in Abhängigkeit von einem Endpositionsparameter gesteuert wird.

7. System nach Anspruch 6, wobei der Endpositionsparameter eine vorbestimmte Verschiebedistanz von dem Start der Futterverschiebeaktion oder eine variable Verschiebedistanz von dem Start der Futterverschiebeaktion ist, wobei die variable Verschiebedistanz auf der Menge an Futter basiert, die durch die Futterverschiebevorrichtung zusammengetragen wurde.

8. System nach einem der vorhergehenden Ansprüche, wobei die Futterabgabevorrichtung (150) an dem Rahmen montiert ist.

9. System nach einem der vorhergehenden Ansprüche, wobei die Steuervorrichtung (8, 108) dazu programmiert ist, die Futterabgabevorrichtung zu steuern, um frisches Futter zwischen der Startposition und der Endposition einer Futterverschiebeaktion abzugeben.

10. System nach einem der vorhergehenden Ansprüche, wobei das System ferner eine Futterdrückvorrichtung (170) umfasst, die dazu eingerichtet ist, auf dem Futtertisch vorhandenes Futter im Wesentlichen seitwärts und in einer Richtung lateral zu der Richtung, in der sich der Futtertisch erstreckt, zu drücken.

11. System nach Anspruch 10, wobei die Futterdrückvorrichtung (170) ein drehbares kreisförmiges Element umfasst.

12. System nach einem der vorhergehenden Ansprüche, wobei das System mit einer Futterentfernungsvorrichtung versehen ist, die dazu eingerichtet ist, eine Futterentfernungsaktion durch Verschieben von Futter zur Außenseite des Futtertisches durchzuführen, wo es für die Tiere nicht mehr zugänglich ist, und wobei die Steuervorrichtung (8, 108) dazu programmiert ist, die Futterentfernungsaktion durch Steuern der Futterverschiebevorrichtung (7, 107) auszuführen, um die Futterentfernungsaktion durchzuführen.

13. System nach einem der vorhergehenden Ansprüche, wobei der Rahmen Teil eines autonom bewegbaren Fahrzeugs ist.

## Revendications

1. Système de manipulation d'aliments (1, 101) destiné à être utilisé dans une ferme, comprenant
- une barrière d'alimentation (2, 102) ayant une table d'alimentation (3, 103) destinée à recevoir des aliments (F), la barrière d'alimentation séparant une zone de vie d'animaux (5) de la table d'alimentation tout en permettant aux animaux présents dans la zone de vie d'animaux d'accéder à la table d'alimentation,
- un châssis (6, 106) déplaçable automatiquement comprenant un dispositif de déplacement d'aliment (7, 107) conçu pour effectuer une première action de déplacement d'aliment en déplaçant l'aliment présent sur la table d'alimentation dans une première direction sensiblement parallèle à la barrière d'alimentation et le long d'une partie de la table d'alimentation, en particulier par le châssis et le dispositif de déplacement d'aliment se déplaçant le long de la barrière d'alimentation dans la première direction, et
- un dispositif de commande (8, 108) programmé pour exécuter l'action de déplacement d'aliment en commandant le dispositif de déplacement d'aliment (7, 107) pour déplacer les aliments présents sur la table d'alimentation le long d'une partie de la table d'alimentation telle qu'après la fin de l'action de déplacement d'aliment, l'aliment déplacé se trouve à un emplacement de fin devant la barrière d'alimentation où il est accessible aux animaux,
le dispositif de déplacement d'aliment étant monté sur le châssis et mobile entre un état actif et un état inactif (7', 107') de sorte que, lorsque le dispositif de déplacement d'aliment est dans l'état actif et que le châssis se déplace le long de la barrière d'alimentation, le dispositif de déplacement d'aliment déplace l'aliment présent sur la table d'alimentation sensiblement parallèlement à la barrière d'alimentation,
**caractérisé en ce que** le système comporte en outre un dispositif de distribution d'aliment (150) conçu pour exécuter une action de distribution d'aliment dans laquelle l'aliment est distribué sur la table d'alimentation en fonction d'une instruction de distribution par le dispositif de commande du système, et le dispositif de commande (8, 108) étant programmé pour commander le dispositif de distribution d'aliment (150) pour ne pas distribuer d'aliment sur une partie de la table d'alimentation (3, 103) englobant l'emplacement de fin d'une action de déplacement d'aliment.

2. Système selon la revendication 1, le dispositif de déplacement d'aliment comprenant un coulisseau (7) ayant un bord inférieur (15, 115) pour le contact avec la table d'alimentation, lequel coulisseau à l'état actif faisant saillie du châssis sur la table d'alimentation au niveau de la barrière de sorte que lorsque le châssis est déplacé dans la première direction, l'aliment présent sur la table d'alimentation soit déplacé.

3. Système selon la revendication 1 ou 2, le dispositif de commande (8, 108) étant programmé pour exécuter une action de déplacement d'aliment ultérieure englobant l'emplacement de fin de la précédente action de déplacement d'aliment.

4. Système selon l'une quelconque des revendications précédentes, le dispositif de commande (8, 108) étant programmé pour exécuter l'action de déplacement d'aliment et/ou l'action de déplacement d'aliment ultérieure en fonction d'un paramètre d'alimentation de repos.

5. Système selon la revendication 4, le paramètre d'alimentation de repos comprenant la quantité, la hauteur ou la température de l'aliment sur la table d'alimentation ou une partie de celle-ci et/ou une quantité de temps écoulée depuis la précédente action de déplacement d'aliment et/ou un point de temps programmé.

6. Système selon l'une quelconque des revendications précédentes, l'emplacement de fin d'une action de déplacement d'aliment étant commandé par le dispositif de commande (8, 108) en fonction d'un paramètre d'emplacement de fin.

7. Système selon la revendication 6, le paramètre d'emplacement de fin étant une distance de déplacement prédéfinie à partir du début de l'action de déplacement d'aliment ou une distance de déplacement variable à partir du début de l'action de déplacement d'aliment, la distance de déplacement variable étant basée sur la quantité d'aliment rassemblée par le dispositif de déplacement d'aliment.

8. Système selon l'une quelconque des revendications précédentes, le dispositif de distribution d'aliment (150) étant monté sur le châssis.

9. Système selon l'une quelconque des revendications précédentes, le dispositif de commande (8, 108) étant programmé pour commander le dispositif de distribution d'aliment pour distribuer de l'aliment frais entre l'emplacement de départ et l'emplacement de fin d'une action de déplacement d'aliment.

10. Système selon l'une quelconque des revendications précédentes, le système comportant en outre un dispositif de poussée d'aliment (170) conçu pour pousser l'aliment présent sur la table d'alimentation sensiblement latéralement et dans une direction latérale à la direction dans laquelle la table d'alimentation s'étend.

11. Système selon la revendication 10, le dispositif de poussée d'aliment (170) comprenant un élément circulaire rotatif.

12. Système selon l'une quelconque des revendications précédentes, le système étant muni d'un dispositif d'enlèvement d'aliment conçu pour effectuer une action d'enlèvement d'aliment en déplaçant l'aliment hors de la table d'alimentation là où il n'est plus accessible aux animaux, et le dispositif de commande (8, 108) étant programmé pour exécuter l'action d'enlèvement d'aliment en commandant le dispositif de déplacement d'aliment (7, 107) pour effectuer l'action d'enlèvement d'aliment.

13. Système selon l'une quelconque des revendications précédentes, le châssis faisant partie d'un véhicule mobile autonome.
